# EUROPEAN PATENT SPECIFICATION

(11) **EP 3 970 529 B1**
(45) Date of publication and mention of the grant of the patent: **13.11.2024**
(21) Application number: 20804865.2
(22) Date of filing: 14.05.2020
(51) Int. Cl.: A24F 40/46, A24F 40/40, A24F 47/00

(54) **THERMAL ENERGY RECOVERY DEVICE, AND CONTACTLESS AIR-HEATING-TYPE ELECTRONIC CIGARETTE HEATER HAVING SAME**
VORRICHTUNG ZUR WÄRMEENERGIERÜCKGEWINNUNG UND KONTAKTLOSE LUFTHEIZVORRICHTUNG EINER ELEKTRONISCHEN ZIGARETTE DAMIT
DISPOSITIF DE RÉCUPÉRATION D'ÉNERGIE THERMIQUE, ET DISPOSITIF DE CHAUFFAGE DE CIGARETTE ÉLECTRONIQUE DE TYPE À CHAUFFAGE D'AIR SANS CONTACT LE COMPRENANT

(30) Priority: 16.05.2019 CN 201920703370 U; 16.05.2019 CN 201910409477; 16.05.2019 CN 201920703044 U
(43) Date of publication of application: 23.03.2022
(73) Proprietor: Xiamen Fengtao Ceramics Co., Ltd, Xiamen, Fujian 361000 (CN)
(72) Inventor: ZHU, Xiaohua, Xiamen, Fujian 361000 (CN); XIONG, Zhaorong, Xiamen, Fujian 361000 (CN); FU, Zengxue, Xiamen, Fujian 361000 (CN); YU, Xiangyi, Xiamen, Fujian 361000 (CN); LIU, Maoqi, Xiamen, Fujian 361000 (CN)
(74) Representative: Ipey
(86) International application number: PCT/CN2020/090244
(87) International publication number: WO 2020/228774

(56) References cited:
- CN-A- 107 411 172
- CN-A- 107 411 172
- CN-A- 107 467 717
- CN-A- 107 594 624
- CN-A- 110 037 352
- CN-U- 206 005 956
- CN-U- 210 492 640
- JP-U- 3 132 085
- US-A1- 2019 090 533

## Description

### Technical field

The present invention relates to the technical field of a heating device utilising heat recovery and in particular to a so-called heat not burn heating device of the non-contact air-heating type.

### Background art

Tobaccos are burned to produce tobacco smoke when smoking products such as cigarettes and cigars are used. Smoke generated by tobacco burning contains many carcinogens like tar, which may do great harm to the human body in case of long-term inhalation. With the technological advancements, people have a pursuit for a healthy life. Therefore, heat not burn products are developed to replace the cigarettes. One of the typical heat not burn solutions is to provide an alternative to these types of products by producing products that release compounds without burning. One example of such products is the so-called heat not burn product, also known as a tobacco heating product or a tobacco heating device, which release compounds by heating but not burning the material.

With regard to the heat not burn products currently available on the market, the heating and braking technology applied conducts heat transfer and exchange by way of heat transfer. The existing heating methods include sheet heating (needle heating) and tubular heating, for example, "a smoking product used together with an internal heating component" disclosed by CN201380044053.7, which adopts sheet heating (needle heating); but this heating method has an disadvantage that the center temperature is high and the surrounding is relatively low, so the tobacco that is close to the sheet heating element is fully carbonized and even scorched while the tobacco in the surroundings has not been carbonized, this may result in tobacco wasting; for another example, "electrically heated smoke system with an internal or external heating device" disclosed by CN201080053099.1, which adopts tubular heating, in tubular heating, the tobacco close to the tube wall is fully carbonized while the tobacco in the center cannot be fully carbonized, in this case, if the temperature is increased, the cigarette paper may be scorched, which will affect the taste. To sum up, the current heating device has the technical defects of uneven baking, small smoke emission, light taste, and poor user experience, and a contaminant produced by long-time smoking of a heat not burn product will attach to the product, which will bring in odd smell.

JP3132085U discloses an apparatus for delivering hot air for heating comprising a heating element having a structure capable of adjusting an amount of ventilation to an ideal range by facilitating adjustment of an amount of heat generated by a hot air generating device for supplying hot air or hot air. The apparatus comprises a plurality of honeycomb or rectangular holes which are formed in a cross section of an electrically insulating tubular body having a cross-sectional diameter of about 38.5 to 50 mm made of quartz glass, glass ceramic, aluminum oxide ceramic, or the like, to form a ventilation path, and an electric resistance film is formed on the inner surface of the ventilation path to generate a heating element used for generating hot air. The apparatus can be prepared by cutting the length of the heating element in response to a request for a heating capacity or the like.

CN107411172 discloses a honeycomb heating body. The honeycomb heating body comprises a heating main body, wherein a plurality of through holes distributed from top to bottom are formed in the heating main body. The honeycomb heating body has the beneficial effects that the efficiency is high, namely, hot air realizing convection is adopted for carrying out heating, so that the temperature rising speed is high, and the hot air directly acts to the central point, so that the efficiency is the highest; the mouthfeel is good, namely, the tobacco products are heated in the convection mode, so that the mouthfeel of the tobacco is purer, and the heating is more uniform compared with the traditional heating; the heat utilization rate is high, namely, the honeycomb heating body completely applies heat to the heated tobacco products, so that the loss of heat caused by heating for the outer wall and the like is effectively reduced; the heating speed is high, namely, compared with the traditional conduction type heating, the heating of the honeycomb heating body is more rapid, and the honeycomb heating body can achieve the temperature being about 200°c only after several seconds.

### Detailed description of the invention

The present invention is created based on the inventor's in-depth research and continuous experiments on the following issues:
In the related art, a contact type heating and baking technology mainly conducts heat transfer and exchange by way of heat transfer, that is, a heating conductor (such as a ceramic heating sheet or needle) transfers temperature to the object baked (smoking product). This heating method mainly has two disadvantages of: 1. The baked object (smoking product) has poor thermal conductivity and cannot fully transfer the temperature, which causes uneven baking of the inner and outer side; 2. Various types of objects to be baked have largely different space densities, if a different type of object is baked, it is difficult to guarantee the heating and baking effect, and good effect can only be achieved by using a matching baked object, so the adaptability is poor. To conclude, this type of heating device has technical defects such as uneven baking, small smoke emission, light taste, and poor user experience, which severely restrict the further development and popularized application of the field.

Considering a ceramic heating cup\heating tube\heating pot type heating device may cause serious heat loss when being used, and the heat emitted by a heating component to the surroundings cannot be utilized properly; if sound heat dissipation is not executed in place, it will affect the hand feeling during use and may also speed up the consumption of lithium batteries for heat not burn products.

For this purpose, the inventor of the present application has found through a number of research and experiments that smoking itself is a process of air flow, if the air flowing into the smoking product is under relatively high temperature, the hot air can directly act to bake the smoking product; and because the hot air can evenly penetrate into all the tobacco of the baked smoking product with the suction process relatively completely and uniformly, the concern of uneven heating will be effectively solved. Therefore, the smoking product is baked by heating the air and then using the hot air flow during the smoking process to achieve heating, this scheme can achieve good overall heating effect.

However, when the air heating scheme is adopted, first it is necessary to select a suitable heating element to heat the air, and when the heating element heats the air, room temperature air needs to enter the heating element, and the temperature of air should reach 300°C or above after flowing out of the heating element; second, some general smoking habits have to be considered, that is, about 20ml per second must be ensured during temperature rise, and each puff lasts for about 3 seconds, and the heating element needs a total heating efficiency of about 60ml air.

To achieve the above effect, the inventor has learned through a lot of experiments that when a heating wire is used to heat the air, the heating wire should have high temperature, and only when the temperature of the heating wire is up to 600°C or above, it can heat the air flowing through to more than 300°C, and the heating wire will cool quickly as long as air flows by, in this way, each puff of smoking will make the temperature of the heating wire drop by 200°C -300°C. Therefore, the heating wire needs power compensation during smoking, otherwise it may be difficult to guarantee air heating required for smoking; while, power compensation is performed for the heating wire based on the air flow detected by an air flow sensor, due to small contact area between heating wire and air, this power compensation scheme not only needs high power to achieve the required heating effect, but also has the problem of inaccurate gas temperature after heating, untimely compensation response, which may cause uneven temperature in all directions.

In addition, when heating the flow air to above 300°C by increasing the temperature of the heating wire, the increased temperature of the heating wire may cause the metal ions separated by the heating wire to enter human body by mixing into the smoking airflow, which will endanger the human health.

For the above, the inventor of the present application has concluded through a lot of research that when air heating is used to bake a smoking product, the heating element used to heat the air needs to have a large heating area so as to reduce the temperature difference between the heating element and the air; the heating element also needs high heat capacity to resist against the temperature drop caused after the smoking airflow passes, and high thermal conductivity to reduce the heating preparation time.

For this purpose, the applicant found based on in-depth research on ceramics for years that a larger heating surface area can be obtained by designing a porous structure of the honeycomb ceramics, so that the heating element will have a high air heating efficiency, and the honeycomb ceramic heating element of porous structure is closer to a solid structure and has a higher heat capacity than a ceramic tube of the same size; in addition, the thermal conductivity of alumina material is greater than 30W/MK, which can make the heat conduction faster and more uniformly, thereby obtaining high thermal conductivity. Therefore, the honeycomb ceramic heating element of porous structure can meet the requirement of baking the smoking product by heating air.

A first purpose of the present invention is to provide a heating device utilising heat recovery, which features long service life and small size.

To fulfill this purpose, a heating device utilising heat recovery according to the present invention comprises an alumina ceramic tube body, wherein the alumina ceramic tube body defines a cavity suitable for placing a heating component and comprises a first group of honeycomb porous channels which are arranged between an outer wall and an inner wall of the alumina ceramic tube body. Optionally, the cavity is confined in the center of the alumina ceramic tube body.

Optionally, the alumina ceramic tube body has a density not less than 3.86 g/cm³.

Optionally, the alumina ceramic tube body is a hollow cylinder with a circular or polygonal cross section.

Optionally, the first group of honeycomb porous channels are uniformly arranged polygonal holes.

Wherein, a wall thickness of both the outer wall and the inner wall is greater than that of the first group of honeycomb porous channels.

The wall thickness of the first group of honeycomb porous channels is within 0.1mm-0.5 mm.

Optionally, the first group of honeycomb porous channels are uniformly arranged circular holes, wherein the pore diameter of the holes is within 0.1-2 mm, and the minimum distance between two adjacent circular holes is 0.1 mm -0.5 mm.

Further, the alumina ceramic tube body is connected to the heating component through a low thermal conductivity tube arranged in the inner wall.

According to the heat recovery device of the embodiment of the present invention, the side wall of the alumina ceramic tube body adopts a unique honeycomb porous structure; when the heating component placed in the defined cavity bakes a smoking product, the heat that does not act on the smoking product will transfer heat to the alumina ceramic tube body; due to the high thermal conductivity of high-purity alumina ceramics used in the alumina ceramic tube body, the alumina ceramic tube body will be quickly heated, and then the air in the porous channel will be heated. During smoking, the heated air flows upward from the heating component, and the normal temperature air flows into the honeycomb porous channel of the alumina ceramic tube body to further take away the heat in the alumina ceramic tube body, thereby achieving heat recovery and saving energy.

A second purpose of the present invention is to provide a heat not burn heating device of the non-contact air-heating type in which a product to be smoked can be baked uniformly in a manner that will not pollute the product due to a pollutant in fluid or direct-contact of a heating element with a cartridge.

In order to fulfill the purpose, an assembly according to the present invention comprises a heating component; the heating device as hereinbefore defined above, wherein the heating component is disposed in the cavity of the device, the cavity being arranged to hold smoking products..

Optionally, the heating component comprises a heating element, wherein a second group of honeycomb porous channels are arranged in the heating element, and a heating circuit is arranged on the heating element to heat the air passing through the second group of honeycomb porous channels.

Optionally, the heating component further comprises a preheating tube and a deflector, wherein the heating element is arranged below the preheating tube, the deflector is arranged between the preheating tube and the heating element, and a plurality of diversion holes are arranged on the deflector.

Optionally, the non-contact air-heating type heat not burn heating device further comprises a sealing sleeve that is arranged in the inner wall of the heat recovery device, wherein the heating component is arranged in the sealing sleeve, and the heating component is connected with the heat recovery device through the sealing sleeve.

Optionally, the heating component and the heat recovery device are both made of high-purity alumina ceramics, with a density being not less than 3.86 g/cm³.

Optionally, the first group of honeycomb porous channels and the second group of honeycomb porous channels are both uniformly arranged polygonal holes, with a pore diameter ranging from 0.1mm to 2 mm, and the minimum distance between two adjacent holes within 0.1mm-0.5 mm .

Specifically, the non-contact air-heating type heat not burn heating device of an embodiment of the present invention comprises a heating component, a sealing sleeve, and a heat recovery device, wherein a first group of honeycomb porous channels are arranged in the side wall of the heat recovery device, and the first group of honeycomb porous channels divide the heat recovery device into an outer wall and an inner wall; the sealing sleeve is arranged in the inner wall of the heat recovery device, a heating component is provided in the sealing sleeve, and the heating component is connected to the heat recovery device through the sealing sleeve; a heating element is arranged in the heating component; a heating circuit is provided on the heating element, wires are arranged at the end of the heating circuit, and a second group of honeycomb porous channels are arranged in the heating element.

Further, the heating component comprises a preheating tube, a deflector, and a heating element in order from top to bottom, and a plurality of diversion holes are arranged on the deflector.

Further, the heating circuit printing materials, include but are not limited to silver, tungsten, and MoMn.

Further, the wire material includes but is not limited to silver, copper, and nickel.

According to the non-contact air-heating heat not burn heating device of the present invention, the air is heated by a heating component, so that the heated flow air uniformly bakes the tobacco to increase the smoke volume. The heating component and the heat recovery device are both made of high-purity alumina ceramics, wherein the high-purity alumina ceramics feature high density and almost have no pores in microstructure, so penetration of contaminants in the fluid is impossible, and no pollution and odd smell will be left on the surface; and it can ensure that the device is not contaminated as the air heating method does not contact with the cartridge.

### Description of the Attached Drawings

Fig. 1 is a structural diagram of a heat recovery device according to an embodiment of the present invention;
FIG.2 is a structural diagram of a heat recovery device according to another embodiment of the present invention;
FIG.3 is a structural diagram of a non-contact air-heating type heat not burn heating device according to an embodiment of the present invention;
FIG.4 is a structural diagram of a heating element according to an embodiment of the present invention;
FIG.5 is a structural diagram of a deflector according to an embodiment of the present invention;

### Detailed description of embodiments

To make the purpose, technical scheme and advantages of the embodiments of the present invention more clear, in combination with the attached drawings given in the embodiments of the present invention, the technical scheme described in embodiments of the present invention are described explicitly and completely below. Apparently, the embodiments described only represent a part but not all of the embodiments of the present invention.

In the description of the present invention, it should be understood that the terms "above", "below", "inner", "outer", "front end", "rear end", "one end", "the other end", etc. refer to the direction or position based on the attached drawings. The terms are provided only for the convenience of describing the present invention and simplifying the description, rather than indicating or implying that the device or element referred therein must have a specific direction, must be constructed or operated in a specific direction, they can not be construed as a limitation on the present invention. The terms "first" and "second" are for illustrative purpose only, which may not be construed as indicating or implying relative importance.

In the description of the present invention, it should be noted that, unless otherwise expressly specified and defined, the terms "install", "arrange", "connect", etc. should be understood in a broad sense. For example, "connect" may be fixed connection or detachable connection or integral connection; it may be mechanical connection or electrical connection; it may be also direct connection or indirection connection through a medium, or it may be internal communication of two components. For those ordinary technicians skilled in the art, the specific meanings of the above terms quoted in the present invention can be understood according to specific situations.

With reference to the attached Figures, the heat recovery device and the non-contact air-heating type heat not burn heating device with the heat recovery device proposed by the embodiments of the present invention are illustrated in detailed below.

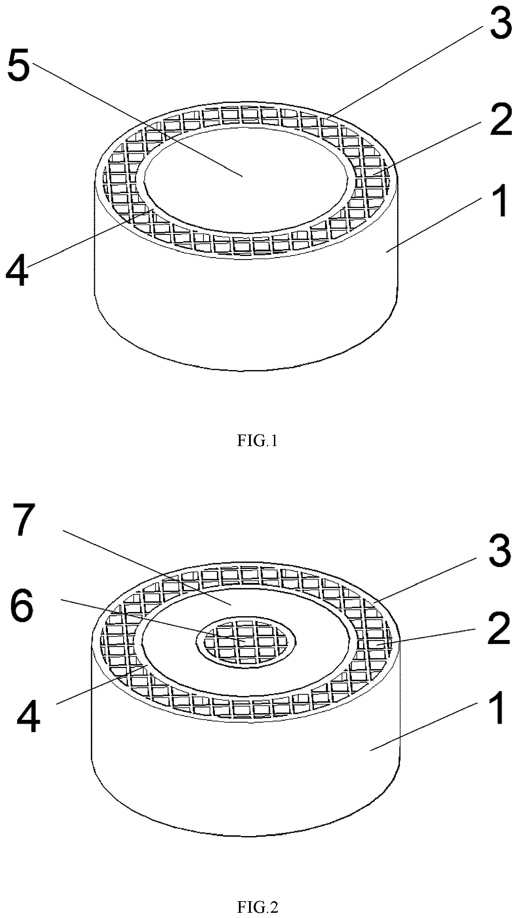

As shown in FIG.1 and FIG.2, a heat recovery device proposed by an embodiment of the present invention comprises an alumina ceramic tube body 1, wherein the alumina ceramic tube body 1 defines a cavity 5 suitable for placing a heating component 6; a first honeycomb porous channel 2 is arranged inside the side wall of the alumina ceramic tube body 1 and the first group of honeycomb porous channels 2 divides the alumina ceramic tube body 1 into an outer wall 3 and an inner wall 4.

Optionally, the center of the alumina ceramic tube body 1 defines a cavity 5, which is suitable for placing a heating component 6, for example, a ceramic heating element.

Optionally, according to an embodiment, the density of the alumina ceramic tube body is not less than 3.86 g/cm³.

Optionally, the alumina ceramic tube body is a hollow cylinder with a circular or polygonal cross section.

According to an embodiment of the present invention, the first group of honeycomb porous channels 2 comprises uniformly arranged polygonal holes. In other embodiments of the present invention, the first group of honeycomb porous channels 2 may comprise uniformly arranged circular holes.

Further, a wall thickness of the outer wall 3 and the inner wall 4 is greater than that of the first group of honeycomb porous channels 2.

Specifically, the wall thickness of the first group of honeycomb porous channels may be within 0.1mm-0.5 mm.

According to another embodiment of the present invention, when the first group of honeycomb porous channels 2 comprises uniformly arranged circular holes, the pore diameter of the holes is within 0.1mm-2 mm, and the minimum distance between two adjacent circular holes is 0.1mm-0.5 mm.

Specifically, as shown in FIGs.1-2, the heat recovery device proposed by an embodiment of the present invention comprises an alumina ceramic tube body 1, wherein a heating component 6 is arranged in the center of the alumina ceramic tube body 1, a first honeycomb porous channel 2 is arranged in the side wall of alumina ceramic tube body 1; the first group of honeycomb porous channels 2 divides the alumina ceramic tube body 1 into an outer wall 3 and an inner wall 4; a heating component 6 is arranged in the cavity 5 that is located in the center of the alumina ceramic tube body 1; and the density of the alumina ceramic tube body is 3.86 g/cm³; the alumina ceramic tube body 1 is a hollow cylinder with a circular cross section; the first group of honeycomb porous channels 2 comprises uniformly arranged square holes; the wall thickness of the outer wall 3 and the inner wall 4 is greater than that of the first group of honeycomb porous channels 2; besides, the alumina ceramic tube body 1 is connected to the heating component 6 through a low thermal conductivity tube 7 arranged in the inner wall 4 through the low thermal conductivity tube 7; and a material of the low thermal conductivity tube 7 includes but is not limited to mullite, cordierite and others.

According to an embodiment of the present invention, the purity of the alumina ceramic tube body 1 is more than 99%, so that the ceramic surface has a high density, which can effectively prevent adsorption of smoke and dust particles, thus to exert the effect of preventing odd smell.

The side wall of the alumina ceramic tube body 1 adopts a unique honeycomb porous structure; when the heating component 6 in the center bakes a smoking product, the heat that does not act on the smoking product will transfer heat to the alumina ceramic tube body 1; due to the high thermal conductivity of high-purity alumina ceramics used in the alumina ceramic tube body 1, the alumina ceramic tube body 1 will be quickly heated, and then the air in the porous channel will be heated. During smoking, the heated air flows upward from the heating component 6, and the normal temperature air flows into the honeycomb porous channel 2 of the alumina ceramic tube body 1 to further take away the heat in the alumina ceramic tube body 1, thereby achieving heat recovery and saving energy. The low thermal conductivity tube 7 is used to fix the heating component 6, and and exerts a certain heat preservation effect on the heat in the center, which may prevent the quick loss of heat to the surroundings, and reduce energy consumption. Alumina ceramics have the advantages of stable structure, strong reliability and long service life.

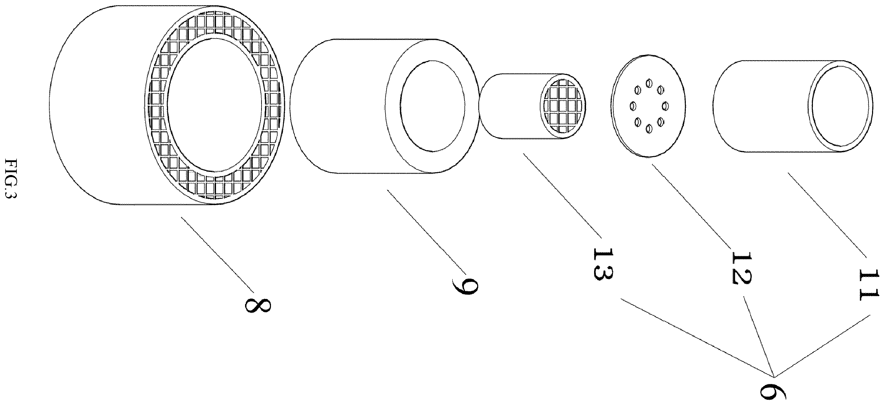

As shown in FIG.2 and FIG.3, the non-contact air-heating type heat not burn heating device proposed by an embodiment of the present invention comprises a heating component 6 and the heat recovery device 8 described in the above embodiment.

Wherein, the thermal energy recovery device 8 defines a cavity 5, which is suitable for placing the heating component 6 and smoking products (not shown).

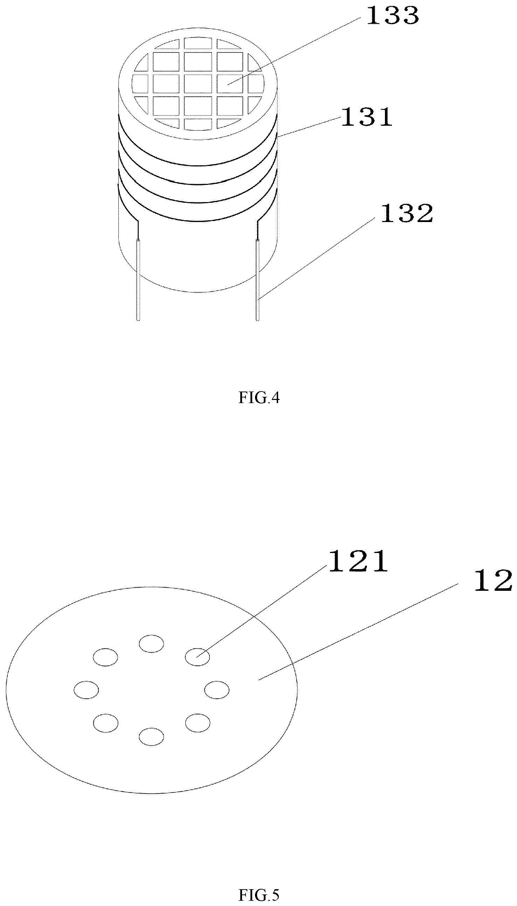

Optionally, in an embodiment of the present invention as shown in FIG.3, the heating component 6 comprises a heating element 13. As shown in FIG. 4, a second honeycomb porous channel 133 is arranged in the heating element 13, and a heating circuit 131 is arranged on the heating element 13 to heat the air passing through the second group of honeycomb porous channels 133.

As shown in FIG.3 and FIG.5, the heating component 6 further comprises a preheating tube 11 and a deflector 12, wherein the heating element 13 is arranged below the preheating tube 11, and the deflector 12 is arranged between the preheating tube 11 and the heating element 13, and a plurality of diversion holes 121 are arranged on the deflector 12.

In an embodiment of the present invention, when a smoker desires to smoke, he/she may put a cartridge into the preheating tube 11 to prevent the cartridge from falling; after powering on, the heating circuit 131 starts to heat, because the effective ingredients such as nicotine can only be heated to generate the smoke to smoke only when the cartridge is baked at 280°C-320°C, so it is necessary to preheat the device, and preheating is deemed as completed when the temperature of the preheating tube 11 and the deflector 12 reaches 200°C, the preheating is completed. Since the preheating is completed, at the time of a first and second puffs during the first heating, the cartridge only needs to be heated from 200°C to 320°C, which is faster than rising from the room temperature, and can better guarantee the smoke volume produced by the first and second puffs. To speed up heating, a honeycomb porous channel 133 is arranged in the heating element 13 and the porous channels are uniformly arranged square holes or other polygonal holes, with the pore diameter ranging from 0.1mm to 2mm, and the minimum distance between two adjacent holes within 0.1mm-0.5mm, and the expanded area is large, the air-heating efficiency is very high, and the heated air flows from the center of the honeycomb without contacting the heating circuit 131, so it will not cause pollution. As the preheating tube 11, the heating element 13 and the deflector 12 are all made of high-purity alumina ceramics featuring good electrical insulation, high strength, and good thermal conductivity, so the ceramic heating element 13 will not leak when being heated, and the preheating tube 11 and the deflector 12 will be heated up because of the good thermal conductivity of high-purity alumina ceramics, the user can smoke the cartridge soon; during smoking the airflow is heated by the ceramic heating element 13 to reach 320°C, then further homogenized and diverted through the diversion holes 121 on the deflector 12 and finally flows into the cartridge more evenly to heat the tobacco, so as to increase the smoke volume, improve the smoking taste, and provide good user experience. During smoking, some fluid contaminants emitted from the cartridge may inevitably remain in the device. As the high-purity alumina ceramics feature high compactness and almost have no pores in microstructure, so penetration of contaminants in fluid is impossible, and no pollution and odd smell will be left on the surface;

According to an embodiment of the present invention as shown in FIG. 3, the non-contact air-heating type heat not burn heating device further comprises a sealing sleeve 9, wherein the sealing sleeve 9 is arranged in the inner wall of the heat recovery device 8, the heating component 6 is arranged in the sealing sleeve 9, and the heating component 6 is connected to the heat recovery device 8 through the sealing sleeve 9.

In an embodiment of the present invention, the heating component 6 and the heat recovery device 8 are both made of high-purity alumina ceramics, with a density being not less than 3.86 g/cm³.

Specifically, in one embodiment, the first group of honeycomb porous channels 2 and the second group of honeycomb porous channels 133 are both uniformly arranged polygonal holes, with a pore diameter ranging from 0.1mm to 2 mm, and the minimum distance between two adjacent holes within 0.1mm-0.5 mm .

According to an embodiment of the present invention, as shown in FIG.1-FIG.5, a non-contact air-heating type heat not burn heating device comprises a heating component 6, a sealing sleeve 9, and a heat recovery device 8, wherein a first honeycomb porous channel 2 is arranged in the side wall of the heat recovery device 8, and the first group of honeycomb porous channels 2 divides the heat recovery device 8 into an outer wall 3 and an inner wall 4; the sealing sleeve 9 is arranged in the inner wall 4 of the heat recovery device 8, a heating component 6 is arranged in the sealing sleeve 9, and the heating component 6 is connected to the heat recovery device 8 through the sealing sleeve 9; a heating element 13 is arranged in the heating component 6; a heating circuit 131 is provided on the heating element 13, wires 132 are arranged at the end of the heating circuit 131, and a second honeycomb porous channel 133 is arranged in the heating element 13.

Further, the heating component 6 is provided with a preheating tube 11, a flow deflector 12 and a heating element 13 sequentially from top to bottom, wherein the flow deflector 12 is provided with a plurality of deflector holes 121.

Further, the heating component 6 and the heat recovery device 8 are both made of high-purity alumina ceramics, with a density being not less than 3.86g/cm³.

Further, the first group of honeycomb porous channels 2 and the second group of honeycomb porous channels 133 are uniformly arranged square holes or other polygonal holes, with a pore diameter ranging from 0.1mm to 2 mm, and the minimum distance between two adjacent holes within 0.1mm-0.5 mm

Further, printing materials of the heating circuit 131 comprise but not limited to silver, tungsten and MoMn.

Further, the wire 132 material includes but is not limited to silver, copper, and nickel.

In the embodiment, as shown in FIG.3, a first honeycomb porous channel 2 is arranged in the side wall of the heat recovery device 8, the first group of honeycomb porous channels 2 divides the heat recovery device 8 into an outer wall 3 and an inner wall 4; a sealing sleeve 9 is arranged in the inner wall 4 of the heat recovery device 8, a heating component 6 is arranged in the sealing sleeve 9, and the heating component 6 is connected to the heat recovery device 8 through the sealing sleeve 9; the heating component 6 comprises a preheating tube 11, a deflector 12, and a heating element 13 in order from top to bottom; as shown in FIG.4, a heating circuit 131 is provided on the heating element 13, wires 132 are arranged at the end of the heating circuit 131, and a second honeycomb porous channel 133 is arranged in the heating element 13. When a smoker desires to smoke, he/she may put a cartridge into the preheating tube 11 to prevent the cartridge from falling; after powering on, the heating circuit 131 starts to heat, because the effective ingredients such as nicotine can only be heated to generate the smoke to smoke only when the cartridge is baked at 280°C-320°C, so it is necessary to preheat the device, and preheating is deemed as completed when the temperature of the preheating tube 11 and the deflector 12 reaches 200°C, the preheating is completed. Since the preheating is completed, at the time of a first and second puffs during the first heating, the cartridge only needs to be heated from 200°C to 320°C, which is faster than rising from the room temperature, and can better guarantee the smoke volume produced by the first and second puffs. To speed up heating, a second honeycomb porous channel 133 is arranged in the heating element 13 and the porous channels are uniformly arranged square holes or other polygonal holes, with the pore diameter ranging from 0.1mm to 2mm, and the minimum distance between two adjacent holes within 0.1mm-0.5mm, and the expanded area is large, the air-heating efficiency is very high, and the heated air flows from the center of the honeycomb without contacting the heating circuit 131, so it will not cause pollution. Furthermore, the heating component 6 and the heat recovery device 8 are both made of high-purity alumina ceramics featuring good electrical insulation, high strength, and good thermal conductivity, so the heating element 13 will not leak when being heated, and the preheating tube 11 and the deflector 12 will be heated up because of the good thermal conductivity of high-purity alumina ceramics, the user can smoke the cartridge soon; during smoking the airflow is heated by the heating element 13 to reach 320°C, then further homogenized and diverted through the diversion holes 121 on the deflector 12 and finally flows into the cartridge more evenly to heat the tobacco, so as to increase the cartridge smoke volume. In the heating process, as a sealing sleeve 9 is arranged in the inner wall 4 of the heat recovery device 8, and a heating component 6 is arranged in the sealing sleeve 9, all the heat that is generated but not not act on the cartridge will transfer heat to a first honeycomb porous channel 2, and the porous channels are uniformly arranged square holes or other polygonal holes, with the pore diameter ranging from 0.1mm to 2mm, and the minimum distance between two adjacent holes within 0.1mm-0.5mm, and the expanded area is large, therefore, the air-heating efficiency is very high, which is useful to provide heat preservation, and save energy by reducing heating time. During smoking, the heated air flows towards the second group of honeycomb porous channels 133, and flows into the heat recovery device 8 to further take away the heat in the first group of honeycomb porous channels 2, thereby achieving heat recovery. Wherein, the sealing sleeve 9 serves as a seal between the heat recovery device 8 and the heating component 6, which ensures that the heated air will not flow to other places. During smoking, some fluid contaminants emitted from the cartridge may inevitably remain in the device. As the high-purity alumina ceramics feature high density (not less than 3.86g/cm³) and almost have no pores in microstructure, so penetration of contaminants in smoke is impossible, and no pollution and odd smell will be left on the surface;

Although the embodiments of the present invention have been shown and described above, it can be understood that the embodiments are exemplary but should not be construed as a limitation on the present invention, the ordinary technician skilled in the art may make changes, modifications, substitutions and variations of the embodiments within the scope of the present invention.

## Claims

1. A heating device ultilising heat recovery, the device comprising an alumina ceramic tube body (1), wherein the alumina ceramic tube body defines a cavity (5) suitable for placing a heating component (6) and **characterised in that** the alumina ceramic tube body (1) comprises a first group of honeycomb porous channels (2) which are arranged between an outer wall (3) and an inner wall (4) of the alumina ceramic tube body

2. The device of claim 1, wherein the cavity is confined in the center of the alumina ceramic tube body.

3. The device of claim 1, wherein the alumina ceramic tube body has a density not less than 3.86 g/cm³.

4. The device of claim 1, wherein the alumina ceramic tube body is a hollow cylinder with a circular or polygonal cross section.

5. The device of claim 1, wherein the first group of honeycomb porous channels are uniformly arranged polygonal holes.

6. The device of claim 5, wherein the wall thickness of both the outer wall and the inner wall is greater than that of the first group of honeycomb porous channels.

7. The device of claim 5, wherein the wall thickness of the first group of honeycomb porous channels is within 0.1mm-0.5 mm.

8. The device of claim 1, wherein the first group of honeycomb porous channels are uniformly arranged circular holes, wherein the pore diameter of the holes is within 0.1-2 mm, and the minimum distance between two adjacent circular holes is 0.1-0.5 mm.

9. An assembly comprising:
a heating component (6); and
the heating device of any one of claims 1-8, wherein the heating component is disposed in the cavity of the device, the cavity being arranged to hold smoking products.

10. The assembly of claim 9, wherein the heating component comprises a heating element (13), a second group of honeycomb porous channels (133) are arranged in the heating element, and a heating circuit (131) is arranged on the heating element to heat the air passing through the second group of honeycomb porous channels.

11. The assembly of claim 10, wherein the heating component further comprises a preheating tube (11) and a deflector (12), the heating component is arranged below the preheating tube, the deflector is arranged between the preheating tube and the heating element, and a plurality of diversion holes (121) are arranged on the deflector.

12. The assembly of any one of claims 9-11, wherein the heating device further comprises a sealing sleeve (9) that is arranged in the inner wall of the heat recovery device, the heating component is arranged in the sealing sleeve, and the heating component is connected with the heat recovery device through the sealing sleeve.

13. The assembly of claim 9, wherein the heating component and the heating device are both made of high-purity alumina ceramics, with a density being not less than 3.86 g/cm³.

14. The assembly of claim 9, wherein the first group of honeycomb porous channels and the second group of honeycomb porous channels are both uniformly arranged polygonal holes, with a pore diameter ranging from 0.1mm to 2 mm, and the minimum distance between two adjacent holes within 0.1mm-0.5 mm .

## Patentansprüche

1. Heizvorrichtung, die Wärmerückgewinnung nutzt, wobei die Vorrichtung einen Aluminiumoxidkeramik-Rohrkörper (1) umfasst, wobei der Aluminiumoxidkeramik-Rohrkörper einen Hohlraum (5) definiert, der zum Einsetzen einer Heizkomponente (6) geeignet ist und **dadurch gekennzeichnet ist, dass** der Aluminiumoxidkeramik-Rohrkörper (1) eine erste Gruppe wabenförmiger poröser Kanäle (2), die zwischen einer Außenwand (3) und einer Innenwand (4) des Aluminiumoxidkeramik-Rohrkörpers angeordnet sind, umfasst.

2. Vorrichtung nach Anspruch 1, wobei der Hohlraum auf die Mitte des Aluminiumoxidkeramik-Rohrkörpers beschränkt ist.

3. Vorrichtung nach Anspruch 1, wobei der Aluminiumoxidkeramik-Rohrkörper eine Dichte von nicht weniger als 3,86 g/cm³ aufweist.

4. Vorrichtung nach Anspruch 1, wobei der Aluminiumoxidkeramik-Rohrkörper ein Hohlzylinder mit kreisförmigem oder polygonalem Querschnitt ist.

5. Vorrichtung nach Anspruch 1, wobei die erste Gruppe wabenförmiger poröser Kanäle gleichmäßig angeordnete polygonale Löcher sind.

6. Vorrichtung nach Anspruch 5, wobei die Wandstärke sowohl der Außenwand als auch der Innenwand größer als die der ersten Gruppe wabenförmiger poröser Kanäle ist.

7. Vorrichtung nach Anspruch 5, wobei die Wandstärke der ersten Gruppe wabenförmiger poröser Kanäle zwischen 0,1 mm und 0,5 mm liegt.

8. Vorrichtung nach Anspruch 1, wobei die erste Gruppe wabenförmiger poröser Kanäle gleichmäßig angeordnete kreisförmige Löcher sind, wobei der Porendurchmesser der Löcher im Bereich von 0,1-2 mm liegt und der Mindestabstand zwischen zwei benachbarten kreisförmigen Löchern 0,1-0,5 mm beträgt.

9. Anordnung, umfassend:
eine Heizkomponente (6); und
die Heizvorrichtung nach einem der Ansprüche 1-8, wobei die Heizkomponente in dem Hohlraum der Vorrichtung angeordnet ist, wobei der Hohlraum dazu angeordnet ist, Rauchprodukte zu halten.

10. Anordnung nach Anspruch 9, wobei die Heizkomponente ein Heizelement (13) umfasst, eine zweite Gruppe wabenförmiger poröser Kanäle (133) in dem Heizelement angeordnet ist und ein Heizkreislauf (131) auf dem Heizelement angeordnet ist, um die Luft, die durch die zweite Gruppe wabenförmiger poröser Kanäle strömt, zu erhitzen.

11. Anordnung nach Anspruch 10, wobei die Heizkomponente ferner ein Vorheizrohr (11) und einen Deflektor (12) umfasst, die Heizkomponente unter dem Vorheizrohr angeordnet ist, der Deflektor zwischen dem Vorheizrohr und dem Heizelement angeordnet ist und eine Vielzahl von Ablenkungslöchern (121) auf dem Deflektor angeordnet ist.

12. Anordnung nach einem der Ansprüche 9-11, wobei die Heizvorrichtung ferner eine Dichtungshülse (9) umfasst, die in der Innenwand der Wärmerückgewinnungsvorrichtung angeordnet ist, wobei das Heizelement in der Dichtungshülse angeordnet ist und das Heizelement durch die Dichtungshülse mit der Wärmerückgewinnungsvorrichtung verbunden ist.

13. Anordnung nach Anspruch 9, wobei die Heizkomponente und die Heizvorrichtung beide aus hochreiner Aluminiumoxidkeramik mit einer Dichte von nicht weniger als 3,86 g/cm³ hergestellt sind.

14. Anordnung nach Anspruch 9, wobei die erste Gruppe wabenförmiger poröser Kanäle und die zweite Gruppe wabenförmiger poröser Kanäle beide gleichmäßig angeordnete polygonale Löcher mit einem Porendurchmesser im Bereich von 0,1 mm bis 2 mm sind und der Mindestabstand zwischen zwei benachbarten Löchern zwischen 0,1 mm und 0,5 mm liegt.

## Revendications

1. Dispositif de chauffage utilisant la récupération de chaleur, le dispositif comprenant un corps de tube en céramique alumine (1), dans lequel le corps de tube en céramique alumine définit une cavité (5) convenable pour placer un composant chauffant (6) et **caractérisé en ce que** le corps de tube en céramique alumine (1) comprend un premier groupe de canaux poreux en nid d'abeille (2) qui sont agencés entre une paroi externe (3) et une paroi interne (4) du corps de tube en céramique alumine.

2. Dispositif selon la revendication 1, dans lequel la cavité est confinée au centre du corps de tube en céramique alumine.

3. Dispositif selon la revendication 1, dans lequel le corps de tube en céramique alumine a une masse volumique non inférieure à 3,86 g/cm³.

4. Dispositif selon la revendication 1, dans lequel le corps de tube en céramique alumine est un cylindre creux avec une coupe circulaire ou polygonale.

5. Dispositif selon la revendication 1, dans lequel le premier groupe de canaux poreux en nid d'abeille sont des trous polygonaux agencés uniformément.

6. Dispositif selon la revendication 5, dans lequel l'épaisseur de paroi à la fois de la paroi externe et de la paroi interne est supérieure à celle du premier groupe de canaux poreux en nid d'abeille.

7. Dispositif selon la revendication 5, dans lequel l'épaisseur de paroi du premier groupe de canaux poreux en nid d'abeille est de 0,1 mm à 0,5 mm près.

8. Dispositif selon la revendication 1, dans lequel le premier groupe de canaux poreux en nid d'abeille sont des trous circulaires uniformément agencés, dans lequel le diamètre des pores des trous est de 0,1 à 2 mm près, et la distance minimale entre deux trous circulaires adjacents est de 0,1 à 0,5 mm.

9. Ensemble comprenant :
un composant chauffant (6) ; et
le dispositif de chauffage de l'une quelconque des revendications 1 à 8, dans lequel le composant chauffant est disposé dans la cavité du dispositif, la cavité étant agencée pour contenir des produits à fumer.

10. Ensemble selon la revendication 9, dans lequel le composant chauffant comprend un élément chauffant (13), un second groupe de canaux poreux en nid d'abeille (133) sont agencés dans l'élément chauffant, et un circuit de chauffage (131) est agencé sur l'élément chauffant pour chauffer l'air passant à travers le second groupe de canaux poreux en nid d'abeille.

11. Ensemble selon la revendication 10, dans lequel le composant chauffant comprend en outre un tube de préchauffage (11) et un déflecteur (12), le composant chauffant est agencé sous le tube de préchauffage, le déflecteur est agencé entre le tube de préchauffage et l'élément chauffant, et une pluralité de trous de déviation (121) sont agencés sur le déflecteur.

12. Ensemble selon l'une quelconque des revendications 9 à 11, dans lequel le dispositif de chauffage comprend en outre un manchon d'étanchéité (9) qui est agencé dans la paroi interne du dispositif de récupération de chaleur, le composant chauffant est agencé dans le manchon d'étanchéité, et le composant chauffant est relié au dispositif de récupération de chaleur à travers le manchon d'étanchéité.

13. Ensemble selon la revendication 9, dans lequel le composant chauffant et le dispositif de chauffage sont tous deux faits de céramique alumine de haute pureté, avec une masse volumique qui n'est pas inférieure à 3,86 g/cm³.

14. Ensemble selon la revendication 9, dans lequel le premier groupe de canaux poreux en nid d'abeille et le second groupe de canaux poreux en nid d'abeille sont tous deux des trous polygonaux uniformément agencés, avec un diamètre des pores allant de 0,1 mm à 2 mm, et la distance minimale entre deux trous adjacents de 0,1 mm à 0,5 mm près.
